# EUROPEAN PATENT SPECIFICATION

(11) **EP 1 486 705 B1**
(45) Date of publication and mention of the grant of the patent: **28.06.2006**
(21) Application number: 03710312.4
(22) Date of filing: 12.03.2003
(51) Int. Cl.: F16J 15/54, F16J 9/14, F16J 15/32

(54) **SEAL RING**
DICHTUNGSRING
BAGUE D'ETANCHEITE

(30) Priority: 15.03.2002 JP 2002072771; 20.11.2002 JP 2002336826
(43) Date of publication of application: 15.12.2004
(73) Proprietor: NOK CORPORATION, Tokyo 105-8585 (JP)
(72) Inventor: WATANABE, Hideya, Nihonmatsu-shi, Fukushima 964-0811 (JP); NAKAOKA, Shinya, Nihonmatsu-shi, Fukushima 964-0811 (JP); TANABE, Yasuaki, Nihonmatsu-shi, Fukushima 964-0811 (JP); EGUCHI, Nobuyuki, Nihonmatsu-shi, Fukushima 964-0811 (JP)
(74) Representative: TBK-Patent
(86) International application number: PCT/JP2003/002915
(87) International publication number: WO 2003/078873

(56) References cited:
- JP-A- 2001 165 322
- US-A- 5 713 578

## Description

### TECHNICAL FIELD

The present invention relates to a seal ring for sealing an annular clearance between two members which can rotate relative to each other.

### BACKGROUND ART

In the related art, the seal ring of this kind is used in a hydraulic apparatus such as an automatic transmission of an automobile.

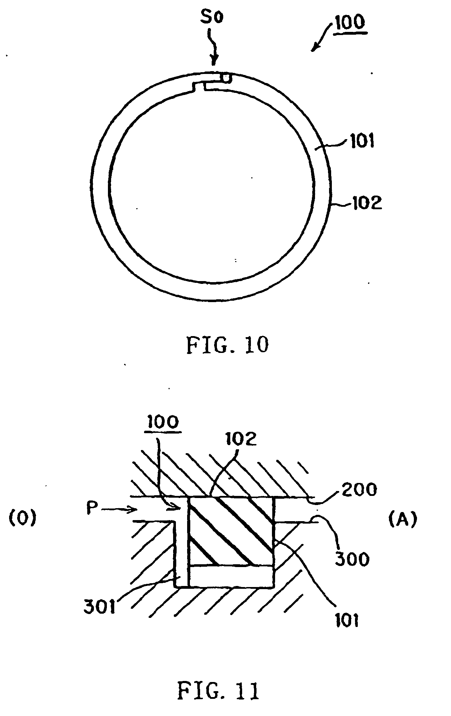

A seal ring according to the related art will be described with reference to FIG. 10 to FIG. 13. FIG. 10 is a schematic top plan view of a seal ring according to the related art. FIG. 11 is a schematic section showing the state, in which the seal ring according to the related art is mounted.

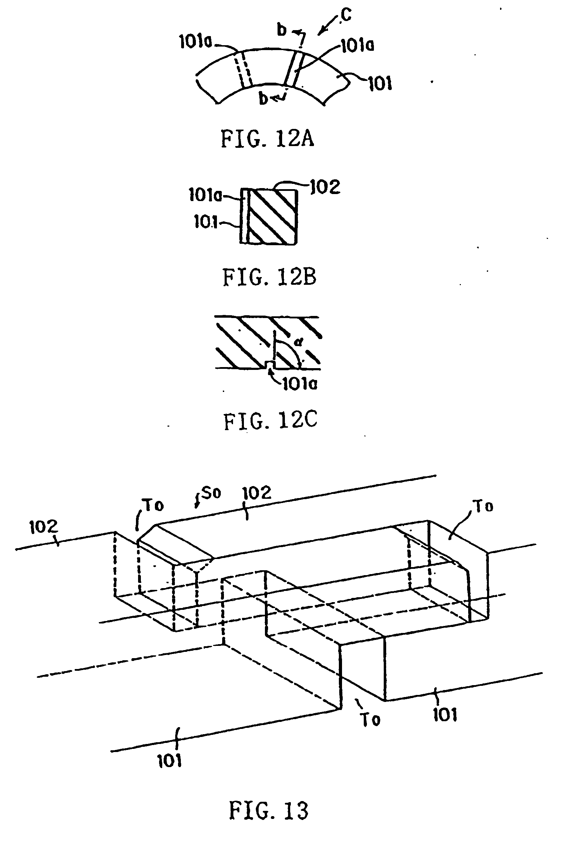

On the other hand, FIG. 12 presents schematic views of the seal ring according to the related art.

Moreover: FIG. 12A is a schematic, partial top plan view; FIG. 12B is a section b - b of FIG. 12A; and FIG. 12C is a side elevation taken in the direction of c of FIG. 12A. FIG. 13 is a perspective view of a cut portion of the seal ring according to the related art. This cut portion is a special step cut.

The shown seal ring 100 seals an annular clearance between a housing 200 that has a bore and a shaft 300 inserted in the bore. Moreover, the seal ring 100 is fitted for use in an annular groove 301 formed in the shaft 300.

On the other hand, the seal ring 100 is formed of a resin material. This seal ring 100 is provided with a first seal face 101 for sealing the side wall face of the annular groove 301 formed in the shaft 300, and a second seal face 102 for sealing the inner circumference of the bore formed in the housing 200.

When a pressure is applied in the direction of arrow P in FIG. 11, the seal ring 100 is pushed to an unsealed fluid side A. Here, the arrow P direction is directed from a sealed fluid side O to the unsealed fluid side A.

As a result, the first seal face 101 pushes the side wall face of the annular groove 301. On the other hand, the second seal face 102 pushes the inner circumference of the bore formed in the housing 200. Thus, the individual seal faces seal at the individual positions.

As described above, the seal ring 100 prevents the leakage of the sealed fluid toward the unsealed fluid side A.

Here, the sealed fluid is exemplified by lubricating oil. The sealed fluid designates the ATF, especially in case it is utilized in the transmission of the automobile.

On the other hand, the ring body of the seal ring 100 is provided at its one circumferential portion with a cut portion S0, as shown in FIG. 10. One reason for providing the cut portion S0 is to improve the assembling properties.

Various modes have been known for that cut portion S0. One mode is exemplified by a special step cut of two-step cuts, as shown in FIG. 13. The seal ring having this special step cut can properly respond to the change in the ambient temperature. This is reasoned in the following.

According to this special step cut, faces perpendicular to the circumferential direction form a clearance T0 with respect to the circumferential direction. Moreover, the seal ring having that special step cut is constructed to block the sealed fluid side and the unsealed fluid side while keeping that clearance T0. As a result, the seal ring can absorb the change in the sizes by the clearance T0 while keeping the sealing state, even if its body is expanded by the heat. Therefore, the seal ring having the special step cut can keep the sealing performance even with the change in the ambient temperature.

In the seal ring 100 thus far described, the seal ring 100 and the shaft 300 are individually abraded, when they rotate relative to each other, due to the friction to be caused between the first seal face 101 and the side wall face of the annular groove 301. This phenomenon is serious especially in case the shaft 300 is made of a soft material such as an aluminum alloy.

One reason for that phenomenon is that a lubricating film of the lubricating oil is hardly formed between the first seal face 101 and the side wall face of the annular groove 301. The abrasion is more serious especially in case the foreign substance in the lubricating oil is bitten between those faces or in case the abraded powder accumulates therebetween.

In case the seal ring 100 is used under a high pressure and at a high rotation, on the other hand, the first seal face 101 and the side wall face of the annular groove 301 are raised to a high temperature by the frictional heat resulting from the relative rotations of the seal ring 100 and the shaft 300. This high temperature may melt the seal ring 100.

A technique for reducing such abrasion is disclosed in JP-A-9-96363, for example. This technique provides a groove for feeding the lubricating oil as the sealed fluid to the clearance between the first seal face 101 and the side wall face of the annular groove 301. This groove can form a lubricating film between those faces. Thus, the abrasion resistance is improved.

This technique will be described with reference to FIG. 12. As shown in FIG. 12, the first seal face 101 is provided with a communication groove 101a for establishing the communication between the sealed fluid side O and the unsealed fluid side A. As a result, the lubricating oil on the sealed fluid side O leaks into the communication groove 101a. when the first seal face 101 comes into sliding contact with the side wall face of the annular groove 301, the lubricating film is formed between those faces. Thus, the lubricated state of the seal face is improved to improve the abrasion resistance.

On the other hand, the aforementioned communication groove 101a exhibits not only the function to form the lubricating film but also the following function. Specifically, the communication groove 101a exhibits the function to discharge the foreign substance existing in the lubricating oil or the abraded powder to the unsealed fluid side A. As a result, that foreign substance or abraded powder can be prevented from being bitten in the clearance between the first seal face 101 and the side wall face of the annular groove 301. Moreover, it is effective to cool the seal face that the aforementioned lubricating film is formed. The provision of the communication groove 101a thus far described can improve the abrasion resistance.

Generally, the communication groove 101a has a sectional shape of a square (α = 90 degrees). In JP-A-9-96363, however, the α is described to exceed 90 degrees but less than 180 degrees, preferably 120 degrees to 135 degrees, while considering removal of the burr which occurs at the molding time.

### DISCLOSURE OF THE INVENTION

In the seal ring according to the related art thus far described, it is necessary for keeping the sealing performance to suppress the leakage of the lubricating oil from the communication groove 101a to some extent. For this suppression, it is necessary to make the width or depth of the groove as small as possible.

By forming the communication groove 101a, therefore, the abrasion resistance can be improved, but the abrasion is not completely prevented. As the abrasion proceeds with the time, therefore, the communication groove 101a becomes gradually shallow. As a result, the ability to discharge the foreign substance (or the ability to discharge contaminants) or the ability to form the lubricating film lowers with the time.

As the abrasion further proceeds, the passage to the communication groove 101a is blocked. Then, the feed of the lubricating oil to the communication groove 101a is interrupted. Moreover, this interruption may cause a malfunction that an abnormal abrasion occurs.

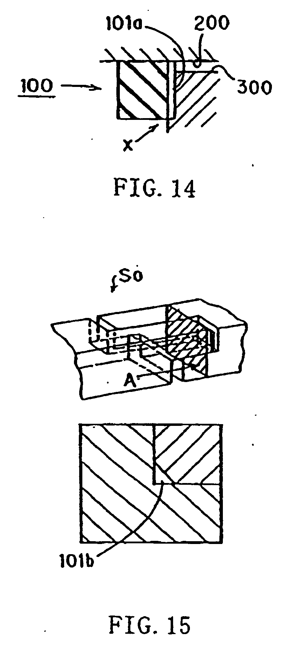

This point will be described in more detail with reference to FIG. 14. FIG. 14 is a schematic section showing the state, in which an abrasion has progressed due to a long use on the seal ring according to the related art.

As shown in FIG. 14, the side wall face of the annular groove 301 is abraded only at its portion in sliding contact with the first seal face 101. Therefore, the seal,ring 100 is pushed to the abraded extent toward the inner side than the initial position of the side wall face of the annular groove 301.

When the bottom face of the communication groove 101a reaches the unabraded face of the side wall face of the annular groove 301, therefore, the passage to the communication groove 101a is shut off, as indicated by arrow X in FIG. 14. Thus, the feed of the lubricating oil stops.

In order to solve this problem, the Applicant has proposed the technique which was disclosed in JP-A-2001-165322. In this technique, as shown in FIG. 15, a chamfered portion 101b is formed in the special step cut portion of the cut portion S0 thereby to form a leakage passage of the lubricating oil. However, this technique may not discharge the foreign substance effectively. Here, FIG. 15 schematically presents the position of a cut face A at its upper portion and a section at its lower portion.

Further, document US 5 713 578 A shows a seal ring comprising an oil channel portion being a groove in an edge of a projection of a cut end of a seal ring. The oil channel portion has a square sectional shape and has the function of removing foreign matter from the sealing faces.

It is the object of the invention to provide a seal ring having improved abrasion resistance.

This object is achieved with a seal ring comprising the features of claim 1. A further development is set forth in claim 2.

According to the invention, there is provided a seal ring adapted to be so mounted in an annular groove, which is formed in one of two members to be assembled for concentric rotations relative to each other, that it may be brought into sliding contact with the side wall face of the annular groove on an unsealed fluid side and pushed into contact with the other member thereby to seal the annular clearance between those two members,
wherein the ring body is cut at one portion in the circumferential direction to form a cut portion, and
wherein the cut portion is provided at its one cut endportion with a projection and at its other cut end portion with a depression to engage with the projection, characterized:
in that a passage having an open end over the whole region in the annular groove depth direction in the sliding contact face against the side wall face of the annular groove and permitting leakage of a sealed fluid from the sealed fluid side to the side wall face of the annular groove on the unsealed fluid side is formed between confronting faces at the time when one cut end portion and the other cut end portion of the cut portion engage; and
in that grooves, whichhave a sectional shape taken generally perpendicular to an edge direction and having a polygonal shape of four or more angles or a general sector shape, are formed individually at intersecting angles of two adjoining ones of the outer wall faces of the projection and at corners confronting the angles in the depression, so that clearances formed by the grooves may form a portion of the passage.

According to the construction of the invention, the passage has the open end over the whole region in the annular groove depth direction. As a result, the film of the sealed fluid is formed over the whole region in the sliding contact face against the side wall face of the annular groove. As a result, the seal ring is excellent in the abrasion resistance. Moreover, the passage is located at a position of no slide so that it does not change with the time. Therefore, it is possible to feed the sealed fluid stably.

Moreover, a portion of the passage is formed by forming grooves having a polygonal shape of four or more angles or a general sector shape, individually at angles of the projection and at corners of the depression. Therefore, the effective sectional area can be enlarged. As a result, it is possible to improve the ability to discharge the foreign substance and the abraded powder in the lubricating oil. Moreover, the sliding face can be effectively cooled by leaking the sealed fluid effectively. These points can improve the abrasion resistance.

It is preferable that the other cut end portion is also provided with a projection having a construction identical to that formed at the one cut end portion whereas the one cut end portion is also provided with a depression having a construction identical to that formed at the other cut end portion.

### BRIEF DESCRIPTION OF THE DRAWINGS

FIG. 1 is a schematic top plan view of a seal ring according to an explanatory example.
FIG. 2 is a schematic section showing the state, in which the seal ring according to the explanatory example is mounted.
FIG. 3 is a perspective, partially sectional view showing the state, in which the seal ring according to the explanatory example is mounted.
FIG. 4 is a schematic perspective view showing a cut portion of the seal ring according to the explanatory example.
FIG. 5 presents schematic perspective views showing the state, in which the cut portions of the seal ring according to the explanatory example are individually separated.
FIG. 6 presents explanatory diagrams showing the sections of individual portions in the cut portions of the seal ring according to the explanatory example.
FIG. 7 is a diagram for comparing a groove having a triangular section and a groove having a square section.
FIG. 8 is a schematic section presenting a section in the cut portion of the seal ring according to the explanatory example.
FIG. 9 is a schematic section presenting a section in the cut portion of the seal ring according to a embodiment of the invention.
FIG. 10 is a schematic top plan view of a seal ring according to the related art.
FIG. 11 is a schematic section showing the state, in which the seal ring according to the related art is mounted.
FIG. 12 presents schematic views of the seal ring according to the related art.
FIG. 13 is a perspective view showing a cut portion of the seal ring according to the related art.
FIG. 14 is a schematic section showing the state, in which an abrasion has progressed due to along use on the seal ring according to the related art.
FIG. 15 is a section of the cut portion of the seal ring according to the related art.

### BEST MODE FOR CARRYING OUT THE INVENTION

The invention will be illustratively described in detail with reference to the drawings 1 to 8, which are not covered by the claims but which are useful for understanding the invention. Figure 9 shows an embodiment of the invention. However, the sizes, materials, shapes and relative arrangements of components described in the embodiment will not be intended to limit the scope of the invention thereto so long as they are not especially specified.

### (Explanatory example)

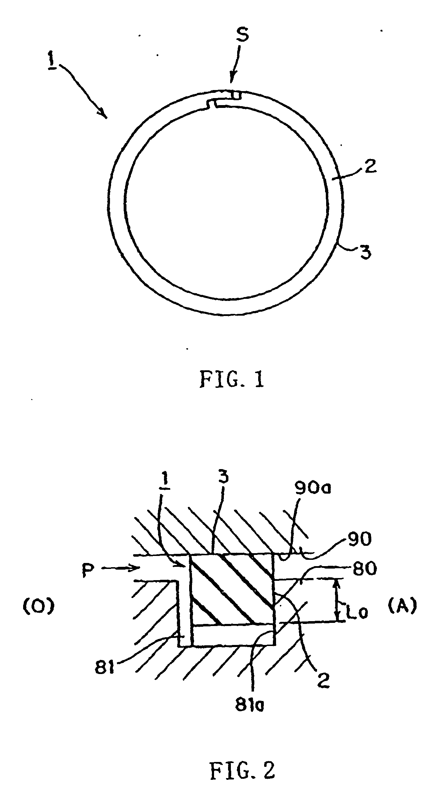

A seal ring according to explanatory example will be described with reference to FIG. 1 to FIG. 6.

At first, a whole structure and so on of the seal ring according to the explanatory example will be described with reference to FIG. 1 and FIG. 2.

FIG. 1 is a schematic top plan view of the seal ring according to the explanatory example. FIG. 2 is schematic section showing the state, in which the seal ring according to the explanatory example is mounted.

The seal ring 1 seals an annular clearance between two members, which are assembled to turn freely and concentrically of each other, as shown in FIG. 2. Here, the annular clearance is formed between a housing 90 having a bore and a shaft 80 inserted in the bore. The seal ring 1 is mounted for use in an annular groove 81 formed in the shaft 80.

The seal ring 1 is provided with a first seal face 2 and a second seal face 3. The first seal face 2 seals the side wall face 81a of the annular groove 81 formed in the shaft 80 (or one member). On the other hand, the second seal face 3 seals the inner circumference 90a of the bore formed in the housing 90 (or the other member).

When a pressure is applied in the direction of arrow P of FIG. 2, the seal ring 1 is pushed toward an unsealed fluid side A. Here, the direction of the arrow P is directed from a sealed fluid side O to the unsealed fluid side A. As a result, the first seal face 2 pushes the side wall face 81a of the annular groove 81. (of the unsealed fluid side A) . On the other hand, the second seal face 3 pushes the inner circumference surface of the bore formed in the housing 90, i.e., the portion confronting the annular groove 81. Thus, the individual seal faces seal at their individual positions.

As described above, the seal ring 1 prevents leakage of the sealed fluid to the unsealed fluid side A.

The sealed fluid in this explanatory example means a fluid having lubricating properties. The following description will be made on the case, in which the sealed fluid is lubricating oil.

In the ring body of the seal ring 1 according to this explanatory example, a cut portion S is formed at one circumferential portion, as shown in FIG. 1. One reason for providing that cut portion S is to improve the assembling properties.

This cut portion S is a special step cut having two steps. The seal ring having this special step cut can properly respond to the change in the ambient temperature.

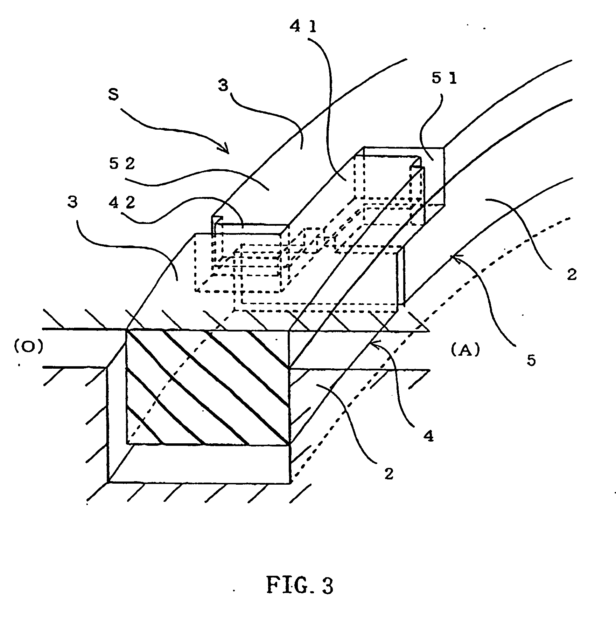

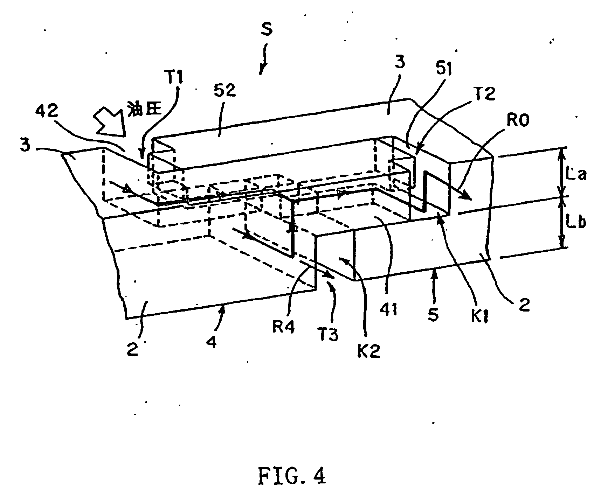

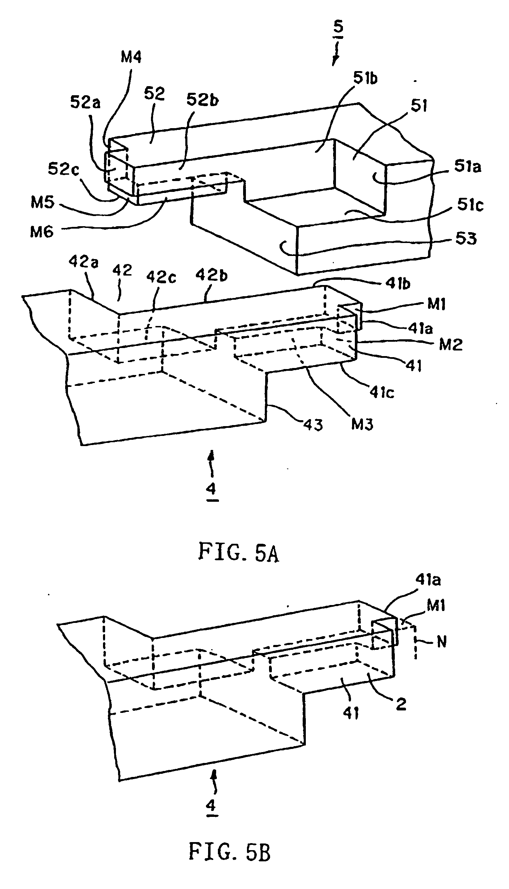

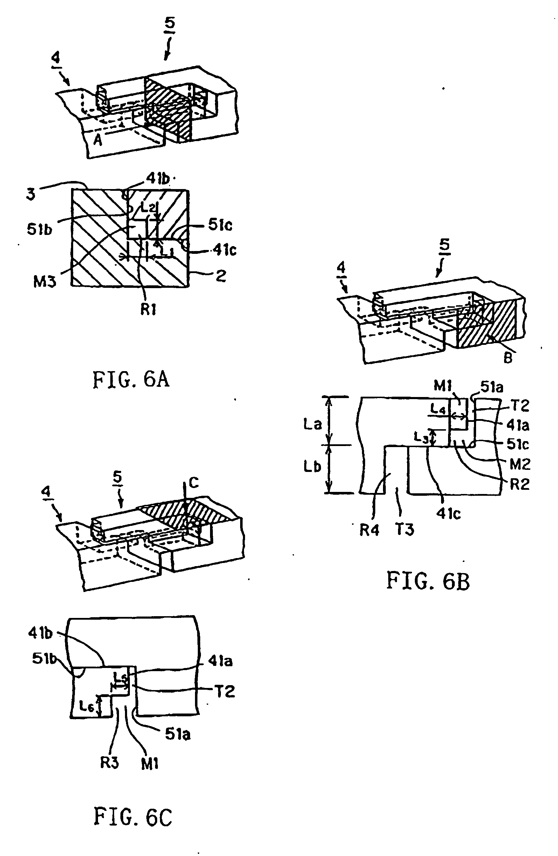

This cut portion S will be described in detail with reference to FIG. 3 to FIG. 6. FIG. 3 is a perspective, partially broken section showing the mounting state of the seal ring according to the explanatory example. FIG. 3 shows the vicinity of the cut portion perspectively. FIG. 4 is a schematic perspective view showing the cut portion of the seal ring according to explanatory example. FIG. 5A is a schematic perspective view showing the state, in which the cut portions are individually separated, and FIG. 5B is a schematic perspective view showing a groove to be formed in the cut portion. FIG. 6A to FIG. 6C are explanatory diagrams showing the sections of the individual portions in the cut portion. As a matter of fact, the individual cut end portions in the cut portion have curvatures, as shown in FIG. 1. For conveniences of the description, however, the cut end portions are schematically shown without any curvature in FIG. 4 to FIG. 6.

In the cut portion S, the ring body is cut into one cut end portion and the other cut end portion. The one end portion will be called a first cut end portion 4. The other cut end portion will be called a second cut end portion 5. These first cut end portion 4 and second cut end portion 5 are constructed to engage with each other.

The first cut end portion 4 is provided with a projection 41 and a depression 42 adjacent to each other. On the other hand, the second cut end portion 5 is provided with a depression 51 to engage with the aforementioned projection 41 and a projection 52 to engage with the aforementioned depression 42 at adjacent positions.

For conveniences of the description, of the wall faces (or outer wall faces) to form the projection 41, as shown in FIG. 5: the foremost end face will be called a first face 41a; the contact face in parallel with and on the inner side of the first seal face 2 will be called a second face 41b; and the contact face concentric to and on the inner side of the second seal face 3 will be called a third face 41c.

Of the wall faces to form the depression 42, on the other hand: the face perpendicular to the circumferential direction will be called a fourth face 42a; the contact face in parallel with and on the inner side of the first seal face 2 will be called a fifth face 42b; and the contact face concentric to and on the inner side of the second seal face 3 will be called a sixth face 42c.

Here, the second face 41b and the fifth face 42b are located on the common face but will be described to have different names for conveniences of the description. Moreover, a face for reference of the first cut end portion 4 will be called a reference face 43.

On the side of the second cut end portion 5, too, of the wall faces (or outer wall faces) to form the projection 52: the foremost end face will be called an eleventh face 52a; the contact face in parallel with and on the inner side of the first seal face 2 will be called a twelfth face 52b; and the contact face concentric to and on the inner side of the second seal face 3 will be called a thirteenth face 52c.

Of the wall faces to form the depression 51, moreover: the face perpendicular to the circumferential direction will be called a fourteenth face 51a; the contact face in parallel with and on the inner side of the first seal face 2 will be called a fifteenth face 51b; and the contact face concentric to and on the inner side of the second seal face 3 will be called a sixteenth face 51c.

Here, the twelfth face 52b and the fifteenth face 51b are located on the common face but will be described to have different names for conveniences of the description. Moreover, a face for reference of the second cut end portion 5 will be called a reference face 53.

In the state having the seal ring 1 mounted, moreover, the wall faces in the circumferential direction closely contact with each other. Here, the wall faces in the circumferential direction are: the second face 41b and the fifteenth face 51b; the fifth face 42b and the twelfth face 52b; the third face 41c and the sixteenth face 51c; and the sixth face 42c and the thirteenth face 52c.

On the other hand, the wall faces in the direction perpendicular to the circumferential direction, that is, the confronting wall faces are arranged to confront each other individually through clearances T1, T2 and T3. Here, the confronting wall faces are: the fourth face 42a and the eleventh face 52a; the first face 41a and the fourteenth face 51a; and the reference face 43 and the reference face 53.

Thus, the seal ring 1 having the special step cut can prevent the leakage of the sealed fluid in the mounted state because its wall faces in the circumferential direction closely contact with each other.

Moreover, the wall faces in the direction perpendicular to the circumferential direction confront each other to form the clearances. Even if the seal ring 1 expands or contracts relative to the housing 90, therefore, their changes can be absorbed to extents of the clearances. Here, the expansion or contraction of the seal ring 1 relative to the housing 90 is caused by the difference in a linear expansion coefficient between the materials of those members. From the discussion thus far made, the seal ring 1 can keep the sealing performance properly even against the change in the ambient temperature.

Generally, the material for the seal ring 1 is a resin, and the material for the housing 90 is a metal. Due to the difference between their linear expansion coefficients, therefore, the thermal expansion of the seal ring 1 becomes larger as the temperature becomes higher, thereby to reduce the clearances T1, T2 and T3.

On the other hand, these clearances T1, T2 and T3 are so set on principle that they may not disappear. The clearances T1 and T2 are further set to become smaller than the clearance T3 (T1 = T2 < T3) . This setting is made to retain the clearance T3 without fail even if the clearances T1 and T2 disappear.

As one feature of the seal ring 1 according to this explanatory example, moreover, there is enumerated a construction, in which the leakage of the sealed fluid is not completely prevented at the cut portion S. In this construction, more specifically, when the individual cut end portions are brought into contact with each other, there is formed such a passage between the confronting faces of those cut end portions as allows the leakage of the sealed fluid from the sealed fluid side O to the side wall face 81a of the annular groove 81 on the unsealed fluid side A.

The construction or the like to form that passage will be described in detail.

As shown in FIG. 5A, rectangular grooves M1, M2 and M3 are formed individually at the angles, where the first face 41a and the first seal face 2, the first face 41a and the third face 41c, and the second face 41b and the third face 41c at the projection 41 formed at the first cut end portion 4 intersect. These rectangular grooves are cut out generally in the rectangular shapes at sections generally perpendicular to the edge directions. Here, FIG. 5B shows the edge line N or the intersecting angle, at which the first face 41a and the first seal face 2 intersect. Here, the aforementioned rectangular groove is located at the intersecting angle of the adjoining faces, that is, either the face confronting the depression 51 engaging the projection 41 and formed in the second cut end portion 5 or the face (i.e., the first seal face 2) confronting the side wall face 81a of the annular groove 81.

Likewise, rectangular grooves M4, M5 and M6 are formed at angles, where the eleventh face 52a on the projection 52 formed at the second cut end portion 5 and the face confronting the first seal face 2, the eleventh face 52a and the thirteenth face 52c, and the twelfth face 52b and the thirteenth face 52c intersect. These rectangular grooves are cut out generally in the rectangular shapes at the sections generallyperpendicular to the edge direction. Here, the aforementioned rectangular groove is located at the intersecting angle of the adjoining faces, that is, either the face confronting the depression 42 engaging the projection 52 and formed in the first cut end portion 4 or the face (i.e., the face confronting the first seal face 2) confronting the side wall face 81a of the annular groove 81.

By thus forming the rectangular grooves, the clearances are formed between the angles of the depressions corresponding to the individual rectangular grooves. These clearances form the passage.

This point will be described in more detail with reference to FIG. 6. FIG. 6A to FIG. 6C present sections taken in three directions at the engaging portion between the projection 41 and the depression 51. The engaging portion between the projection 52 and the depression 42 is similar so that its description is omitted.

Here, FIG. 6A schematically presents the location of the cut face A at its upper portion and the section at its lower portion. FIG. 6B and FIG. 6C schematically present perspective views at their individual upper portions and views taken in directions B and C at their individual lower portions.

At first, FIG. 6A presents a section perpendicular to the circumferential direction in the engaging portion between the projection 41 and the depression 51.

As shown, the clearance is formed between the rectangular groove M3 and the corresponding angle, at which the fifteenth face 51b and the sixteenth face 51c intersect. Thus, a first passage R1 is formed.

Moreover, FIG. 6B presents a section parallel to the first seal face 2 in the engaging portion between the projection 41 and the depression 51.

As shown, the clearance is formed between the rectangular groove M2 and the corresponding angle, at which the fourteenth face 51a and the sixteenth face 51c intersect. Thus, a second passage R2 is formed.

Moreover, FIG. 6C presents a section concentric to the second seal face 3 in the engaging portion between the projection 41 and the depression 51.

As shown, the clearance is formed between the rectangular groove M1 and the corresponding angle, at which the fourteenth face 51a and the side wall face 81a (not shown in FIG. 6) of the annular groove 81 intersect. Thus, a third passage R3 is formed.

Moreover, the aforementioned first passage R1, second passage R2 and third passage R3 are connected with each other. A similar passage is also formed in the engaging portion between the projection 52 and the depression 42. These individual passages form a 0-th passage R0.

At the engaging portions between the projection 52 and the depression 42, there are individually formed passages corresponding to the aforementioned first passage R1, second passage R2 and third passage R3. With the clearance T3 being between the reference face 43 and the reference face 53, on the other hand, there is also formed a passage leading from the clearance T3 directly to the first passage R1, as shown in FIG. 4.

A fourth passage R4 is also formed by the clearance T3 between the reference face 43 and the reference face 53.

Here, the 0-th passage R0 has an open end K1 for the first seal face 2, and the fourth passage R4 has an open end K2 for the first seal face 2.

Moreover, the region of the open end K1 in the depth direction of the annular groove is designated by La in FIG. 4 and FIG. 6, and the region of the open end K2 in the depth direction of the annular groove is designated by Lb in FIG. 4 and FIG. 6. Thus, the open ends of the passages are formed all over the first seal face 2 in the annular groove depth direction.

As a result, the open ends of the passages are formed over the whole region (indicated at Lo in FIG. 2) in the annular groove depth direction in the sliding contact face of the first seal face 2 against the side wall face 81a of the annular groove 81.

With the construction thus far described, the lubricating oil as the sealed fluid leaks from the sealed fluid side O via the 0-th passage R0 and the fourth passage R4. At this time, the open ends of the passages are formed in the annular groove depth direction in the sliding contact face against the side wall face 81a of the annular groove 81 throughout the annular groove depth direction. As a result, a film of the lubricating oil is formed all over the sliding contact face by the sliding contact between the first seal face 2 and the side wall face 81a. Therefore, the oil film can lower the frictional force at the sliding contact time and can cool the whole sliding face.

As a result, the sliding performance can be improved, and a foreign substance or abraded powder in the lubricating oil can be discharged via those passages so that the abrasion resistance is improved.

In the related art, there is a construction, in which the passage for causing the leakage of the sealed fluid is formed at the sliding position, as described above. In the seal ring 1 according to this explanatory example, on the contrary, the passage for permitting the leakage of the sealed fluid is formed in the unsliding cut portion S. In this explanatory example, therefore, the shape (e.g., the sectional shape or the size) of the passages does not change with the time. Therefore, it is possible to feed the sealed fluid stably for a long time. Moreover, it is possible to keep the function stably to discharge the foreign substance or abradedpowder in the lubricating oil.

As a result, the stable sealing performance can be kept for a long time to improve the qualification. Moreover, a shaft can be properly used even if it is made of a soft metal material such as an aluminum alloy. Moreover, the seal ring can be used under higher PV conditions than those (i.e., 25 to 30 MPa · m/s) for the resin seal ring of the related art.

In this explanatory example, on the other hand, the second passage R2 is formed by providing the rectangular groove M2. Even if the seal ring 1 is thermally expanded to bring the first face 41a as the leading end face of the projection 41 into abutment against the fourteenth face 51a thereby to reduce the clearance T2 to zero, the second passage R2 can be retained to feed the sealed fluid stably.

Likewise, the third passage R3 is formed by providing the rectangular groove M1. Even if the seal ring 1 is thermally expanded to bring the first face 41a as the leading end face of the projection 41 into abutment against the fourteenth face 51a thereby to reduce the clearance T2 to zero, the third passage R3 can be retained.

At the portions of the second passage R2 and the third passage R3, on the other hand, the size of the clearance T2 fluctuates so that the flow rate does not become stable. In this explanatory example, therefore, the flow rate is set by the first passage R1.

Specifically, the necessary flow rate is set by the size of the rectangular groove M3. Here, the rectangular groove M1 and the rectangular groove M2 are set larger than the rectangular groove M3 so that they may not be influenced by the flow rates of the second passage R2 and the third passage R3. As a result, it is possible to keep the smallest sectional area of the leakage passage constant. Therefore, the flow rate is determined exclusively by the size of the rectangular groove M3.

Here, as shown in FIG 6A to FIG 6C it is assumed that the areas of the rectangular grooves M1, M2 and M3 are L1 x L2, L3 x L4 and L5 x L6, respectively. At this time, the value of L1 x L2 is set smaller than the values of L3 x L4 and L5 x L6. Here, the magnitudes of the values L1 and L2 are restricted by the size of the cut portion S and the quantity of leakage demanded for the using conditions or the like. These magnitudes are desirably about 0.2 to 0.5 mm.

In case (of JP-A-2001-165322) the leakage passage of the lubricating oil is formed by forming the chamfer, the chamfered portion has the triangular section. As a result, the portion capable of discharging the foreign substance is restricted within the generally central region of the triangle. Therefore, the area is seriously lost to reduce the effective area. It seems to follow that the discharge of the foreign substance is not effective. In this explanatory example, on the contrary, the leakage passage of the lubricating oil is formed into the rectangular groove. Therefore, the areal loss is reduced to enlarge the effective area so that the foreign substance can be discharged generally all over the groove.

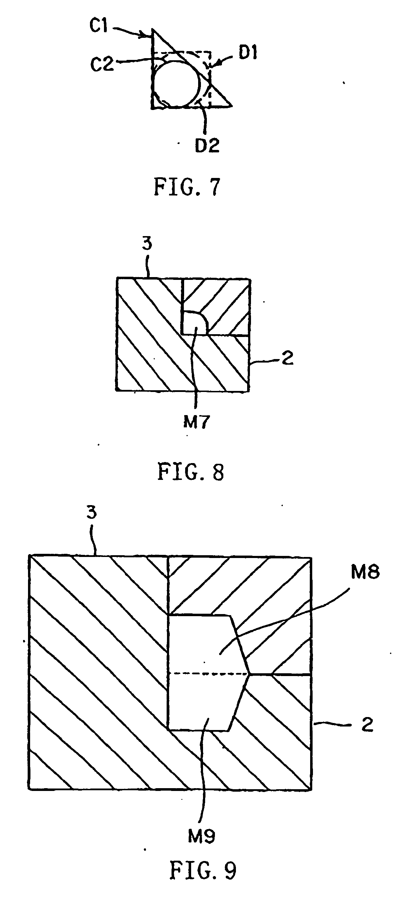

FIG. 7 is a diagram for comparing a triangle C1 and a square D1 having equal sectional areas. The region of the triangle C1 to pass the largest foreign substance is C2, and the region of the square D1 to pass the largest foreign substance is D2. It is understood from the diagram that the region D2 is larger than the region C2.

Thus in the case of equal sectional areas, the square section has a larger effective area than that of the triangular section for discharging the foreign substance. Therefore, the square section can discharge a larger foreign substance so that it has a superior ability to discharge the contaminants in the lubricating oil. In respect of the leakage of the lubricating oil, moreover, the square section can leak the sealed fluid more efficiently. Therefore, the square section can cool the seal face more effectively. Therefore, the abrasion resistance is improved the better to improve the sliding performance the better.

The shown example thus far described has been exemplified by the case, the groove for forming the passage is given a generally square sectional shape. However, this sectional shape may be a rectangular shape, a trapezoidal shape or a polygonal shape having four or more angles. This is because these sectional shapes can make the effective area larger than that of the triangular section. Moreover, a groove M7 having a sectional shape of a general sector may also be formed, as shown in FIG. 8 schematically presenting a section corresponding to the position of the cut face of the upper portion of FIG. 6A. In this case, too, the effective area can be made larger than that of the triangular section.

Here, a resin composite of a heat-resisting resin and a filler can be applied as the material making the seal ring 1.

As the heat-resisting resin, there can be enumerated a polycyanoacryle-ether resin (PEN), an aromatic polyether-ketone resin such as polyether-ether ketone (PEEK) resin, an aromatic thermoplastic polyimide resin, a 4-6 polyamide resin, a polyphenylene sulfide resin, a polytetrafluoroethylene resin and so on. These resins are excellent in heat resistance, flame resistance and chemical resistance, and exhibit excellent mechanical properties.

Here, the filler is blended with a view to improving the mechanical strength and the wear resistance of the material and to give low-friction properties and so on. The material for the filler should not be especially restricted.

### (Embodiment)

FIG. 9 shows an embodiment of the invention. In the aforementioned explanatory example, a portion of the passage is constructed by forming the groove only in the projection side disposed in the cut end portion. In this embodiment, a portion of the passage is constructed by forming a groove in the depression side, too.

The remaining constructions and actions are identical to those of the explanatory example so that their descriptions are omitted by designating the identical components by the common reference numerals.

FIG. 9 is a schematic section presenting a section in the cut portion of the seal ring according to the embodiment of the invention. FIG. 9 schematically presents a section corresponding to the cut face of the upper portion of FIG. 6A.

In this embodiment, as shown, there is formed a groove M8 having a trapezoidal section generally perpendicular in the edge direction to the angle, at which the two adjoining outer wall faces (i.e., the second face 41b and the third face 41c, and the twelfth face 52b and the thirteenth face 52c) on the projection (41, 52) intersect.

There is also formed a groove M9 having a trapezoidal section generally perpendicular in the edge direction to the corner (i.e., the corner formed by the fifteenth face 51b and the sixteenth face 51c, and the corner formed by the fifth face 42b and the sixth face 42c) which confronts that angle in the depression (51, 92) .

Moreover, those grooves M8 and M9 form a portion of the passage.

Thus, the grooves are formed individually on the projection side and on the depression side so that a portion of the passage is formed by the clearances of those grooves. As a result, the passage area can be made larger than that of the aforementioned explanatory example. Thus, the flow rate can be made higher to find an effective application to the case, in which the lubrication has to be enhanced for the using conditions. Moreover, the effective area for discharging the foreign substance can be made larger than that of the construction of the explanatory example. Therefore, it is possible to improve the contaminant discharging ability better.

With the grooves being formed in the projection or the depression, the shearing strength becomes the lower as the sectional area of the projection or the depression is the less. Here in this embodiment, however, the groove is formed in both the projection and the depression. Therefore, the area of the groove formed on the projection side or the depression side for acquiring the effective sectional area of the necessarypassage canbe smaller than that of the case, in which the groove is formed in one of the projection or the depression. Thus, this embodiment is effective, too, for suppressing the reduction in the shearing strength.

Here, the shown embodiment has been described on the case, in which the sectional shape is trapezoidal. However, the sectional shape should not be limited to the trapezoidal shape but may be a polygonal shape having four or more angles, or a sector shape. In the shown embodiment, the grooves to be formed on the projection side and the depression side have the identical sizes and shapes, but may also have different sizes and shapes.

In the description thus far made, moreover, the grooves are formed individually in the angles and corners of the arcuate portions of the projection and the depression thereby to form the passages. On the contrary, the passages can also be formed by forming the grooves individually in the angles and corners (e.g., the angle between the first face 41a and the third face 41c and the corner between the fourteenth face 51a and the sixteenth face 51c) of the radially cut portions of the projection and the depression.

### INDUSTRIAL APPLICABILITY

According to the invention, as has been described hereinbefore, it is possible to keep the sealing performance stably for a long time. Moreover, the ability to discharge contaminants is improved. Still moreover, the qualification is improved.

A seal ring for sealing an annular clearance between two members which are disposed for free rotations relative to each other. At a cut portion which is cut at a portion of the seal ring, there is formed a passage for allowing leakage when the cut end portions engage with each other. This passage is given a sectional shape of square or the like. This passage improves an abrasion resistance.

## Claims

1. A seal ring (1) adapted to be so mounted in an annular groove (81), which is formed in one of two members (80, 90) to be assembled for concentric rotations relative to each other, that it may be brought into sliding contact with the side wall face (81a) of said annular groove (81) on an unsealed fluid side (A) and pushed into contact with the other member thereby to seal the annular clearance between those two members (80, 90),
wherein the ring body is cut at one portion in the circumferential direction to form a cut portion (S), and
wherein said cut portion (S) is provided at its one cut end portion (4, 5) with a projection (41, 52) and at its other cut end portion (5, 4) with a depression (51, 42) to engage with said projection (41, 52), and
a passage having an open end over the whole region in the annular groove depth direction in the sliding contact face against the side wall face (81a) of said annular groove (81) and permitting leakage of a sealed fluid from the sealed fluid side (O) to the side wall face (81) of said annular groove (81) on the unsealed fluid side (A) is formed between confronting faces at the time when one cut end portion (4, 5) and the other cut end portion (5, 4) of said cut portion (S) engage;
**characterized in that** grooves (M1, M2, M3, M4, M5, M6), which have a sectional shape taken generally perpendicular to an edge direction and having a polygonal shape of four or more angles or a general sector shape, are formed individually at intersecting angles of two adjoining ones of the outer wall faces of said projection (41, 52) and at corners confronting said angles in said depression (41, 52), so that clearances (R1, R2, R3) formed by said grooves (M1, M2, M3, M4, M5, M6) may form a portion of said passage.

2. A seal ring as set forth in claim 1,
wherein said other cut end portion (5, 4) is also provided with a projection (52, 41) having a construction identical to that formed at said one cut end portion (4, 5) whereas said one cut end portion (4, 5) is also provided with a depression (42, 51) having a construction identical to that formed at said other cut end portion (5, 4).

## Patentansprüche

1. Dichtungsring (1), der ausgebildet ist für die Anordnung in einer ringförmigen Nut (81), die in einem von zwei relativ zueinander konzentrisch drehbaren, zusammenzusetzenden Elementen (80, 90) ausgebildet ist, daß er in gleitenden Kontakt gebracht werden kann mit der Seitenwandfläche (81a) der ringförmigen Nut (81) auf der Seite der unabgedichteten Flüssigkeit (A) und eng an das andere Element gedrückt wird, um **dadurch** den ringförmigen Zwischenraum zwischen diesen beiden Elementen (80, 90a) abzudichten,
wobei der Ringkörper an einem Abschnitt in Umfangsrichtung aufgeschnitten ist, um einen Schnittabschnitt (S) zu bilden und
wobei der Schnittabschnitt (S) an seinem einen Schnitt-Endabschnitt (4, 5) mit einem Vorsprung (41, 52) und an seinem anderen Endabschnitt (5, 4) mit einer Aussparung (51, 42) ausgestattet ist, die mit dem Vorsprung (41, 52) in Eingriff steht, und
ein Durchgang, der ein offenes Ende über den gesamten Bereich in die Tiefenrichtung der ringförmigen Nut in der gleitenden Kontaktfläche gegen die Seitenwandfläche (81a) der ringförmigen Nut (81) aufweist und den Austritt einer abgedichteten Flüssigkeit von der Seite der abgedichteten Flüssigkeit (O) zur Seitenwandfläche (81a) der ringförmigen Nut (81) auf der Seite der unabgedichteten Flüssigkeit (A) gestattet, herausgebildet ist zwischen gegenüberstehenden Flächen zu dem Zeitpunkt, wenn ein Schnitt-Endabschnitt (4, 5) und der andere Schnitt-Endabschnitt (5, 4) des Schnittabschnitts (S) ineinander greifen;
**dadurch gekennzeichnet, daß**
die Nuten (M1, M2, M3, M4, M5, M6), die eine im wesentlichen senkrecht zu einer Kantenrichtung stehende Querschnittsform haben und eine polygonale Form von vier und mehr Winkeln oder eine allgemeine Kreisausschnittsform aufweisen, einzeln ausgebildet sind bei sich kreuzenden Winkeln von zwei ansto-ßenden Wandflächen des Vorsprungs (41, 52) und an Ecken, die den Winkeln in der Aussparung (41, 52) gegenüber stehen, so daß die durch die Nuten (M1, M2, M3, M4, M5, M6) ausgebildeten Zwischenräume (R1, R2, R3) einen Abschnitt des Durchgangs bilden können.

2. Dichtungsring gemäß Anspruch 1,
wobei der andere Schnitt-Endabschnitt (5, 4) ebenfalls einen Vorsprung (52, 41) aufweist, der identisch aufgebaut ist wie der am einen Schnitt-Endabschnitt (4, 5) ausgebildete, wohingegen der eine Schnitt-Endabschnitt (4, 5) auch mit einer Aussparung (42, 51) versehen ist, die identisch aufgebaut ist wie die am anderen Schnitt-Endabschnitt (5, 4) ausgebildete.

## Revendications

1. Bague d'étanchéité (1) adaptée pour être montée dans une rainure annulaire (81) qui est formée dans un de deux éléments (80, 90) devant être assemblé pour des rotations concentriques l'un par rapport à l'autre, qu'elle peut être amenée en contact coulissant avec la face de paroi latérale (81a) de ladite rainure annulaire (81) sur un côté de fluide non étanche (A) et poussée en contact avec l'autre élément pour de ce fait étanchéifier le jeu annulaire entre ces deux éléments (80, 90),
dans laquelle le corps de bague est coupé au niveau d'une partie dans le sens circonférentiel pour former une partie découpée (S), et
dans laquelle ladite partie découpée (S) est pourvue au niveau de sa partie d'extrémité découpée (4, 5) d'une saillie (41, 52) et au niveau de son autre partie d'extrémité découpée (5, 4) d'un enfoncement (51, 42) pour se mettre en prise avec ladite saillie (41, 52), et
un passage comprenant une extrémité ouverte sur l'ensemble de la zone dans le sens de la profondeur de la rainure annulaire dans la face de contact coulissant contre la face de paroi latérale (81a) de ladite rainure annulaire (81) et permettant une fuite d'un fluide étanchéifié provenant du côté de fluide étanchéifié (O) vers la face de paroi latérale (81) de ladite rainure annulaire (81) sur le côté de fluide non étanchéifié (A) est formé entre des faces opposées au moment où une partie d'extrémité découpée (4, 5) et l'autre partie d'extrémité découpée (5, 4) de ladite partie découpée (S) se mettent en prise ;
**caractérisée en ce que** des rainures (M1, M2, M3, M4, M5, M6), qui présentent une forme transversale prise globalement perpendiculairement au sens d'un bord et présentant une forme polygonale de quatre angles ou plus ou une forme sectorale générale, sont formées individuellement au niveau d'angles d'intersection de deux adjacentes des faces de paroi extérieure de ladite saillie (41, 52) et au niveau de coins opposés aux dits angles dans ledit enfoncement (41, 52), de sorte que des jeux (R1, R2, R3) formés par lesdites rainures (M1, M2, M3, M4, M5, M6) peuvent former une partie dudit passage.

2. Bague d'étanchéité selon la revendication 1,
dans laquelle ladite autre partie d'extrémité découpée (5, 4) est également pourvue d'une saillie (52, 41) ayant une construction identique à celle formée au niveau de ladite première partie d'extrémité découpée (4, 5) tandis que ladite première partie d'extrémité découpée (4, 5) est également pourvue d'un enfoncement (42, 51) ayant une construction identique à celui formé au niveau de ladite autre partie d'extrémité découpée (5, 4) .
